# EUROPEAN PATENT SPECIFICATION

(11) **EP 2 724 002 B1**
(45) Date of publication and mention of the grant of the patent: **10.10.2018**
(21) Application number: 12737313.2
(22) Date of filing: 12.06.2012
(51) Int. Cl.: F01P 7/14, F15B 11/042, F02B 37/18, F02D 19/06

(54) **FLUID FLOW CONTROL DEVICE FOR INTERNAL COMBUSTION PISTON ENGINE**
DURCHFLUSSREGLER FÜR EINE KOLBENBRENNKRAFTMASCHINE
DISPOSITIF DE RÉGULATION D'ÉCOULEMENT DE FLUIDE POUR MOTEUR À PISTON À COMBUSTION INTERNE

(30) Priority: 23.06.2011 FI 20115650
(43) Date of publication of application: 30.04.2014
(73) Proprietor: Wärtsilä Finland Oy, 65380 Vaasa (FI)
(72) Inventor: LILJENFELDT, Gösta, FI-65450 Solf (FI); NYNÄS, Håkan, FI-65280 Vaasa (FI)
(74) Representative: Genip Oy
(86) International application number: PCT/FI2012/050585
(87) International publication number: WO 2012/175792

(56) References cited:
- EP-A1- 2 071 174
- FR-A1- 2 865 504
- GB-A- 577 132
- JP-A- 51 062 271
- JP-A- 58 099 502
- JP-A- 2006 183 849
- JP-U- S 604 715
- US-A- 4 590 966

## Description

### Technical field

The present invention relates to a fluid flow control according to the preamble of claim 1.

### Background art

Internal combustion engine, particularly an internal combustion piston engine comprises several fluid circuits having control devices for controlling the fluid flows in circuits of the engine. For example a cooling system of an engine is typically controlled in order to maintain the operation temperature within required limits. There are also other fluid flows in connection with which at least some kind of flow rate control is performed, such as fuel injection, charge air / exhaust gas flow, just to mention a few. Typically, controlling such fluid flows is practised by adjusting the flow rate to at least some extent. Basically all fluid flows in an internal combustion piston engine have an impact to its operation, some of the fluid flows requiring very accurate control due to their strong effect on the operation.

The operational requirements of combustion engines are more and more stringent and thus the accuracy and reliability of control systems is ever more important. This relates, in addition to a fuel system the importance of which has been recognized a long ago, to practically all fluid flow systems in a internal combustion piston engine, which have an effect on the overall performance of the engine.

Controlling the temperature in an internal combustion piston engine is typically accomplished by means of circulating water-based solution, which is circulated via the cooling channels provided in the engine removing the generated heat. A whole or a partial flow is divided from the circulation in the engine and directed to a heat exchanger system in which the solution is cooled, after which the cooled solution is returned to the circulation.

The thermostatic valves are sensing the temperature of the surrounding solution and are acting according to changes in the temperature. The thermostatic valves are typically installed to control the temperature of the fluid leaving the engine or they may also be set to control the temperature coming into the engine.

In typical engine installations in connection with a power plant or marine engines there can be long distances between the engine and the central coolers. This relates particularly to large internal combustion engines being capable of producing power more than 150 kW/cylinder. The flow velocities in the pipes are also limited to avoid erosion, corrosion and high flow losses. As a consequence of the above the response from the control action can be up to minutes late. This has the consequence that the actual engine temperature is fluctuating from too cold to too warm temperature for long periods of time while an average is near to the set value of the thermostatic valve. Transient load changes usually also makes the temperature to fluctuate before settling near to the set values. Mechanical thermostatic valves that are commonly used in engines are able to operate adequately only if the demands on control accuracy are low enough. Thus, there is a need to improve the prior art solution towards more accurate and faster control device for controlling the temperature of an internal combustion piston engine.

Fuel injection system of a large internal combustion piston engine being capable of producing power more than 150 kW/cylinder operated particularly with a fuel oil is typically arranged by making use of a common rail based fuel supply system in which fuel injection is separated from producing the pressurized fuel. Fuel is pressurized by means of a high pressure pump system and delivered to an accumulator from which the fuel is metered to each cylinder by separated fuel injectors. The injectors may be electronically of electro-hydraulically controlled. Typically the load control of the engine effects on the duration of injection of fuel through fuel injectors so that when more power is required, more fuel is injected increasing the duration of the injection time. This leads to the fact that in practise the dimensioning of the injector is a compromise in order to handle the whole load range of the engine. It is possible that the flow pattern may vary in undesired manner depending on the load.

A multifuel or a dualfuel engine using e.g. natural gas as a primary fuel and fuel oil as secondary fuel is known as. Such an engine can be run on e.g. natural gas, light fuel oil (LFO) or heavy fuel oil (HFO) and it can be a two-stroke or four-stroke engine operating with e.g. otto- and/or diesel cycle. Moreover, the engine can switch over from gas to LFO/HFO and vice versa during engine operation. In gas-mode operation gas is brought into the cylinder of the engine via a gas admission valve provided in connection with the inlet gas channel of the cylinder head upstream the inlet valve. Liquid fuel oil is used as a pilot fuel for igniting the compressed gas-air mixture in the cylinder. Typically the load control of the engine is realized by the gas admission valve so that when more power is required, the duration of the open state of the valve is increased. This leads to the fact that in practise the dimensioning of the fuel admission valve is a compromise in order to handle the whole load range of the engine.

Also a lubrication oil circulation in a large internal combustion piston engine requires control of the oil flow in certain extent. The lubrication system comprises typically an external oil cooler through which the oil may be passed to flow in order to maintain the temperature of the oil below a set upper limit value. In order to regulate oil temperature the lubrication of circulation is provided with a temperature controlled valve system. The oil temperature is beneficial to be maintained within certain limits. If the temperature is too low the lubrication may be insufficient, and on the other hand too high temperature may cause problem particularly on the behaviour on piston surfaces, and other surfaces which are locally under high thermal load. Thus, there is a need to improve the prior art solution towards more accurate and faster control device for controlling the oil temperature of an internal combustion piston engine.

Still another fluid flow, being extremely important, in connection with an internal combustion piston engine is the charge air - exhaust gas flow. In present efficiently operating internal combustion piston engines it is almost a rule to use a turbocharger in connection with the engine. In order to operate properly and efficiently over a wide load range the turbo charger is often provided with a so called waste gate. The waste gate is a by-pass channel over the turbine part of the turbo charge through which a controllable amount of exhaust gas may be led without performing work in the turbine part. The waste gate is typically provided with a mechanical valve operating based e.g. on the charge air pressure. The valve is subjected to very harsh environment operating at a temperature of several hundreds of Celsius degrees, and being under influence of high velocity exhaust gas. Also in transient stages the control on the turbocharger has considerable impact on the engine performance.

Fluid flow systems with specific fluid control devices are known for example from JP58099502, US4590966 or JPS604715.

An object of the invention is to provide a fluid flow arrangement for an internal combustion piston engine in which the control performance is considerably improved compared to the prior art solutions.

It is a particular object of an embodiment of the invention to provide a temperature control arrangement for an internal combustion piston engine in which the control performance is considerably improved compared to the prior art solutions.

It is a still particular object of an embodiment of the invention to provide a fuel injection system for an internal combustion piston engine in which the control performance is considerably improved compared to the prior art solutions.

It is a still particular object of an embodiment of the invention to provide a gaseous fuel admission system for an internal combustion piston engine in which the control performance is considerably improved compared to the prior art solutions.

It is a still particular object of an embodiment of the invention to provide a turbocharger system for an internal combustion piston engine in which the control performance is considerably improved compared to the prior art solutions.

### Disclosure of the Invention

The objects of the invention can be met substantially as is disclosed in the independent claim and in the other claims describing more details of different embodiments of the invention.

A fluid flow control device for an internal combustion piston engine, which engine comprises fluid flow system having a main fluid channel and a branch channel which branches from the main fluid channel, in which fluid flow system the fluid flow control device is arranged at the location where the branch channel branches from the main fluid channel, the fluid flow control device comprised at least two parallel valve units having two operational positions. At least one of the valve units is provided with a removably assembled restriction part effecting on the flow characteristics of the valve unit.

This provides a fluid flow control device for an internal combustion piston engine in which the control performance is considerably improved.

According to another embodiment of the invention all of the valve units are provided with a removably assembled restriction element effecting on the flow characteristics of the valve unit.

According to another embodiment of the invention the valve units are identical to, and the restriction elements are different from each other.

According to another embodiment of the invention the removably assembled restriction elements are selected to provide required flow rate range in the engine.

By means of the concept of utilizing removable restriction part the control device is very adaptive to various application and effective modularization is achieved which e.g. simplifies the manufacture of the device.

According to another embodiment of the invention the restriction element comprises a removably assembled flange.

According to another embodiment of the invention the restriction part comprises a pin element arranged removably in to the valve unit.

According to the invention the valve unit is an on-off valve.

According to the invention the valve unit is a flow dividing unit having two operational positions.

According to another embodiment of the invention the fluid flow control device is connected to a cooling system of the engine to control the flow of a cooling medium in the system.

According to another embodiment of the invention the fluid flow control device is connected to a fuel feeding system of the engine to control the flow of a fuel in the system.

According to another embodiment of the invention the fluid flow control device is connected to a lubrication oil system of the engine to control the flow of lubrication oil in the system.

According to another embodiment of the invention the fluid flow control device is connected to a turbocharger in the exhaust gas system of the engine to control the flow of exhaust gas in the system.

### Brief Description of Drawings

In the following, the invention will be described with reference to the accompanying exemplary, schematic drawings, in which
Figure 1 illustrates a fluid flow system in an internal combustion piston engine according to the first embodiment of the invention,
Figure 2 illustrates a fluid flow system in an internal combustion piston engine according to another embodiment of the invention,
Figure 3 illustrates a fluid flow system in an internal combustion piston engine,
Figure 4 illustrates a fluid flow system in an internal combustion piston engine according to still another embodiment of the invention,
Figure 5 illustrates an embodiment of a fluid flow control device according to the invention,
Figure 6 illustrates an embodiment of a valve unit according to the invention,
Figure 7 illustrates an embodiment of a valve unit for a fluid flow control device according to the invention,
Figure 8 illustrates another embodiment of a valve unit for a fluid flow control device according to the invention,
Figure 9 illustrates a a valve unit for a fluid flow control device,
Figure 10 illustrates a valve unit for a fluid flow control and
Figure 11 illustrates a fluid flow system in an internal combustion piston engine according to still another embodiment of the invention.

### Detailed Description of Drawings

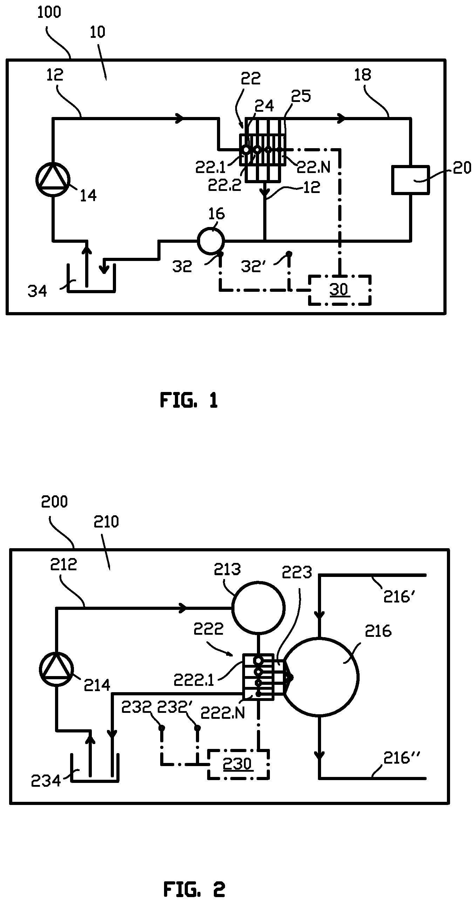

Figure 1 depicts schematically a fluid flow system 10 in an internal combustion piston engine 100. The fluid flow system includes a main fluid channel 12, which may consist of a single flow path or of a plurality of parallel flow paths. The main fluid channel 12 comprises means 14 for increasing the pressure in the main fluid channel 12. In this context the means 14 for increasing the pressure is to be understood broadly even if a symbol of a pump is used the figure 1. In some cases the means 14 for increasing the pressure may, of course, be an actual pump or alike but in some cases even a combustion chamber acts as one in which combustion process may act as the pressurizing means 14. The main fluid channel leads to a utilization unit 16 in which the fluid is utilized in a way depending on the application and process in question. According to an embodiment the utilization unit is a once-through system and in such a case the flow system may not include any or may include only partial recirculation of the fluid. This and other embodiments will become apparent e.g. from the other figures and their description in more detailed manner.

The flow system 10 comprises a branch channel 18 which branches from the main fluid channel 12 forming parallel flow path to the main fluid channel. The purpose of the branch channel is to pass a first portion (0% -100%) of the fluid through a processing unit 20 in, or in connection with the engine and arrange a second, remaining portion (100% - 0%) of the fluid to bypass the utilization unit 20. In Figure 1 there is also shown a source of fluid 34 which the main fluid channel is connected to. The source of fluid 34 may be for example a fuel tank, oil sump or cooling liquid reservoir of an engine.

The control arrangement comprises further a fluid flow control device 22 at the location where the branch channel branches from the main fluid channel or generally at the location where the branch channel is connected to the main fluid channel. The fluid flow control device 22 comprises several parallel valve units 22.1, 22.2, ... 22.N each of which has two operational positions, between which the valve units may be switched.

According to a preferred embodiment of the invention each of the valve units is provided with a base part 25 and a restriction element 24. Preferably the restriction element 24 is arranged into the valve unit so that it effects on i.e. throttles the fluid flow. The restriction element 24 advantageously is removably assembled to the base part 25. The restriction element is a member effecting on the flow characteristics of the valve unit in throttling manner. More specifically the restriction element 24 effects on the flow resistance of the valve unit, preferably by forming a locally constricted flow area. This is depicted in figure 1 as a circle. Additionally it is advantageous that the base parts 25 of valve units 22.1, 22.2, ... 22.N are substantially identical, and particularly with respect to joining elements by means of which the restriction element 24 joins to the valve unit. The number of valve units may vary but preferably there are at least four units. The restriction part includes means for effecting on the flow characteristics of the valve unit when assembled, which means that the restriction parts are preferably different in different valve units. This way the valve units are modularized allowing their flow characteristics to be changed simply by-changing only the only restriction part 24 in the valve unit.

The fluid flow control device is also provided with a control system 30 arranged to control each of the valve units 22.1, 22.2,... 22.N into one of the two operational positions between which the valve unit may be switched. In the embodiment of Figure 1 the operational positions governs the flow of the fluid either to the branch channel 18 or further in the main fluid channel 12. The control system is connected to a probe 32 in connection with the engine 100. The probe may comprise one or several individual probes 32, 32' in the engine.

The control system 30 is arranged to operate so that it reads or receives the measurement value of the probe 32 or the measurement value of the probe 32 is sent to the control system 30. Based on the measurement value or values of the probe the control system determines a need for a change in the control scheme practised. In case a change is needed the control device selects a new combination of operational positions of the valve units. This way a new arrangement of the valve units is set.

The restriction parts 24 are preferably selected so that when the first valve unit has a relative flow area of 1, a second valve unit 1/2, a third valve unit 1/4 etc. i.e. their flow areas are arranged so that the "next" valve unit is doubling the flow area of the previous one. In case the fluid flow control device comprises four on/off valve units the correspondence between the combination of operational positions and flow rate is shown in the following table, which clearly shows the accuracy which can be achieved with 4 valve units.

| Valve unit 1 | Valve unit 2 | Valve unit 3 | Valve unit 4 | Total relative flow rate |
|---|---|---|---|---|
| 0 | 0 | 0 | 0 | 0,000 |
| 0 | 0 | 0 | 1 | 0,125 |
| 0 | 0 | 1 | 0 | 0,250 |
| 0 | 0 | 1 | 1 | 0,375 |
| 0 | 1 | 0 | 0 | 0,500 |
| 0 | 1 | 0 | 1 | 0,625 |
| 0 | 1 | 1 | 0 | 0,750 |
| 0 | 1 | 1 | 1 | 0,875 |
| 1 | 0 | 0 | 0 | 1.000 |
| 1 | 0 | 0 | 1 | 1,125 |
| 1 | 0 | 1 | 0 | 1,250 |
| 1 | 0 | 1 | 1 | 1,375 |
| 1 | 1 | 0 | 0 | 1,500 |
| 1 | 1 | 0 | 1 | 1,625 |
| 1 | 1 | 1 | 0 | 1,750 |
| 1 | 1 | 1 | 1 | 1,875 |

In this embodiment the valve unit 1 provides a relative flow rate 1, valve unit 2 provide a relative flow rate 0,5 an so on. It can be seen that 16 different flow rates can be obtained with four valve units. Correspondingly, 32 and 64 different flow rates may be obtained with 5 and 6 valve units.

As each of the valve units may be independently switched between two operational positions it is possible to set practically any required fluid flow situations that may be needed by arranging and combining of the operational positions of individual valve units suitably. Depending on the type of the valve units the operational positions may be "on" or "off" or positions guiding the flow to either of two possible directions. In the case of Figure 1 the valve units have two selectable positions guiding the flow to either of two possible directions.

The fluid flow system 10 in figure 1 depicts particularly an embodiment of a cooling system of an internal combustion piston engine 100, however in a schematic manner. The fluid flow control device shown in Figure 1 is arranged in connection with a cooling system, in which the fluid is water-based cooling liquid, the utilization unit 16 depicts the cooling channels of the engine, particularly the cooling channels 16 in the cylinder head of the engine. The processing unit 20 is a cooler system, in which the cooling liquid may be cooled. Thus the engine 100 comprises suitably arranged cooling channels in the engine and a fluid flow control device 22 which governs the cooling operation of the fluid flow system.

The control system 30 which is arranged to control each of the valve units 22.1, 22.2,... 22.N is connected to a temperature probe 32, 32' arranged in connection with the engine 100. The probe 32 may comprise one or several temperature probe units. According to an advantageous embodiment of the invention the probe is arranged remotely to the control device 22. Preferably at least one temperature probe unit is arranged in vicinity of the combustion chamber of the engine, for example to at least one of the cylinder head of the engine. This is depicted in figure 1 by the position of the probe 32 near the utilization unit 16, which may be for example a cooling channel in the cylinder head. This way, since the operation of the fluid flow control device is controlled based on the actual value measured by the probe/devices, the proportion of the cooling liquid guided to the cooler system is determined by the actual cooling demand sensed particularly at the location where the thermal load is high and/or critical. Also, the provision of utilizing several probes 32, 32' makes it possible to adjust the cooling more precisely according to the actual requirements. In this case the control scheme may be selected based on actual temperature of several locations. The present invention also makes the temperature control of the engine faster, since it even enables proactive control operation.

According to another embodiment of the invention the temperature probe comprises at least two temperature probe units at different locations of the engine. Both of the locations may be remote to the location of the valve units. This way the temperature control may be arranged to be dependent on temperature of at least two different locations neither of which is the temperature of the cooling liquid at the location of the valve units.

According to an embodiment of the invention the control system 30 of the cooling system comprises two or more temperature probes 32, 32'. In that case the operation of the fluid flow control device is controlled by making use of said two or more temperature probes 32, 32'. Thus the control is more accurate and various operational parameters may be taken into account in the control.

Figure 2 depicts schematically a fluid flow system 210 for an internal combustion piston engine 200 according to another embodiment of the invention. In this embodiment the fluid flow system is a liquid fuel direct injection system of an internal combustion piston engine 200. The flow system includes a main fluid channel which in this embodiment is a main fuel line 212. The main fuel line 212 comprises a high pressure pump 214 for increasing the pressure of the fuel and delivering the pressurized fuel into a fuel accumulator system 213 from fuel storage 234. In figure 2 there is only one cylinder 216 of the number of cylinders belonging to the internal combustion piston engine shown, as well as an inlet air channel 216' and an exhaust gas channel 216". The fluid flow system 210 i.e. the liquid fuel direct injection system further comprises a fuel flow control device 222 in connection with a fuel injection unit 223. The fuel injection unit 223 is arranged in connection with the cylinder 216 of the engine forming a direct injection device. The fuel flow control device 222 is arranged to control the amount of fuel injected into the cylinder 216. In this case the fuel is preferably liquid fuel.

The fuel flow control device 222 comprises preferably several parallel valve units 222.1, ... 222.N which each has two operational positions between which the valve units may be switched. In this case the valve units are on/off valves. Each of the valve units has different flow characteristics. There are at least two valve units provided, but preferably at least four.

The fuel flow control device 222 is also provided with a control system 230 comprising actuator devices, by means of which each of the valve units 222.1, ,... 222.N may be switched between the two operational positions . The control system is preferably provided with a first probe system 232 transmitting the information at least of the rotational position of the crankshaft either directly or indirectly and information relating to engines load. There is also advantageously a second probe system 232' arranged in the control system 230. The second probe system 232' is arranged to provide an indication of the load of the engine to the control system 230. Each injection before and/or during the power stroke of the engine involves a step of controlling the amount of injected fuel and/or timing and/or rate shaping of the injection by means of selecting and controlling an operational position of each valve unit 222.1 ... 222.N. Thus for each injection it is determined that which of the valve units are opened, and timing of the opening, as well as closing of each of the valve unit.

This way the injection process may be controlled very efficiently. In addition to being able to control the open-state duration of each valve unit it is possible to control the amount of fuel injected by selecting suitable valve units to open for each injection. Additionally the timing of the opening of each valve unit may be controlled thus making it possible to arrange suitable rate shaping of each injection. In other words, at least when running the engine under load i.e. when the engine is not idling, each injection comprises opening of at least two valve units. According to a preferred embodiment the opening of the valve units is commenced one after the other. This has the effect of evening the possible pressure peak caused by ignition of the fuel in the combustion chamber particularly when the engine is operated as a compression ignition engine.

According to an embodiment of the fuel injection system according to the invention under normal service of the engine, the control system 230 is arranged to select suitable selection of valve units for each injection to be opened, the selection being based on engine's operational parameters like rotational speed and required load of the engine. The control system 230 may also be arranged to select a first combination of valve units to be open with a first duration of injection at the first operational circumstances of the engine. However, the control system 230 may also be arranged to select a second combination of valve units to be open with a second duration of injection at a second operational circumstances of the engine. This way the control of the injection is very precise.

With the present invention it is also possible to obtain an equal operation by making use of different selection of valve units, which increases the redundancy of the engine considerably. This is of great advantage particularly in marine vessel power systems.

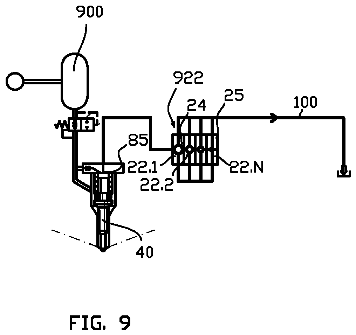

In the figure 9 there is shown a fluid flow system used for releasing or activating a control pressure effecting in the fuel injection system, the state of which control pressure rules the operational state of the fuel injection system. By controlling the opening sequence of at least two parallel valve units the pressure release rate is controlled and a fuel injection rate shaping function is provided.

The fuel injection system is operated so that the source of pressurized fuel maintains the fuel accumulator volume 900 filled with fuel at a predetermined pressure. When the parallel valve units 922.1, 922.2, ... 922.N each of which has two operational positions, between which the valve units may be switched, are opened in sequence, the flow communication between an outlet channel 85 and the low pressure part 100 of the system the pressure in the chamber or space above the injector needle 40 decreases rapidly, but still in controllably way.

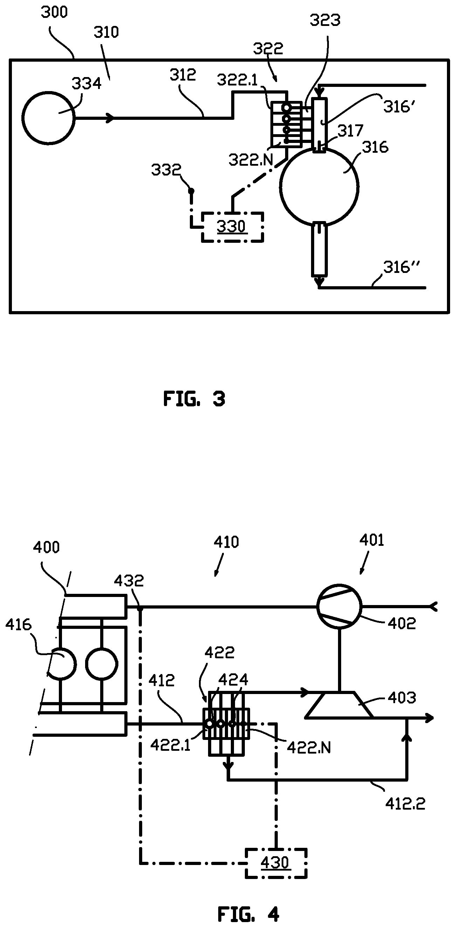

Figure 3 depicts schematically a fluid flow system 310 for an internal combustion piston engine 300. The fluid flow system is particularly a gaseous fuel feeding system of an internal combustion piston engine 300. The gaseous fuel injection system includes a main fluid channel which in this embodiment is a gaseous fuel feed line 312. The fuel feed line 312 is in flow connection to a gaseous fuel source 334 and to a fuel flow control device 322. For clarity reasons there is shown only one cylinder 316 of the number of cylinders in the internal combustion piston engine. Also an inlet air channel 316' and an exhaust gas channel 316" leading to and from the cylinder 316 are shown. The fuel flow control device 322 in fluid flow system 310 comprises further a fuel gas admission unit 323. The fuel admission unit 323 is arranged to open into the inlet air channel 316' upstream in vicinity to the inlet valve/valves 317 in each cylinder.

The fuel flow control device 322 and the gas admission unit 323 comprises several parallel valve units 322.1, ... 322.N. Each valve unit is connected to fuel feed line 312 and controllably opens in the inlet air channel 316'. Each of the valve units has two operational positions between which the valve units may be switched. In this case the valve units are on/off valves. Each of the valve units has different flow characteristics. Thus the amount of the gas admitted to the inlet air channel is controlled so that before and/or during the inlet valve is open during and/or before each inlet stroke a selected number of valve units is changed to their "on"-position. At that position the valve units open in the inlet air channel 316' and allow the admission of fuel gas into the channel. Each valve unit has only two operational positions: 0% opened or 100% opened but with a suitable selection of valve units which are opened/closed it is possible to control the amount of fuel gas admitted into the inlet gas for each combustion event in the work cycle.

The fuel flow control device 322 is also provided with a control system 330 arranged to control each of the valve units 322.1, ,... 322.N in the fuel admission unit into one of the two operational positions between which the valve unit may be switched. The control system is preferably provided with a probe system 332 transmitting the information of the rotational position of the crankshaft either directly or indirectly. Additionally the probe system may include a probe unit in connection with the inlet valve 317. This way the injection process may be controlled very efficiently and the gas injection may be accurately the timed in respect to the work cycle of the engine and the position of the inlet valve(s). In addition to being able to control the open-state duration of each valve unit it is possible to control the amount of gas injected by selecting suitable combination valve units to open for each injection in the working cycle of the engine. Preferably the number of parallel valve units arranged in connection with inlet air channel is at least four.

In figure 4 there is schematically shown a fluid flow system 410 in an internal combustion piston engine 400 according to a still another embodiment of the invention. The internal combustion piston engine 400 includes a turbo charger unit 401 with a compressor part 402 and a turbine part 403. In this embodiment the fluid flow system is a gas exchange system in connection with the engine 400.

The gas exchange system includes a main fluid channel which in this embodiment includes an exhaust gas conduit 412. The exhaust gas conduit 412 is at its first end in connection with the cylinders 414 in which the pressure and temperature of the exhaust gases is increased by means of combustion of fuel material in the cylinders of the engine. The exhaust conduit is connected at its second end to the inlet of the tubine part 403 in which energy of the exhaust gas is partially used for driving the compressor part 402. The turbo charger unit may be of a type known as such. The gas exchange system or the turbine part is provided with a bypass channel 412.2, which connects the engine's exhaust gas conduit 412 directly to the outlet side of the turbine unit, particularly the turbine part 403 thereof.

The exhaust gas conduit 412 is provided with a flow control device 422 arranged upstream the turbine part. The flow control device 422 controls the flow of exhaust gas to the turbine part 403 and/or passing by the turbine part via the bypass channel 412.2. The control device operates as a waste gate of the turbo charger unit 401. The flow control device 422 i.e. the waste gate comprises several parallel valve units 422.1, ... 422.N. The valve units are in connection with the exhaust conduit 412 at their inlet sides. Each of the valve unit 422.1, ... 422.N has two operational positions to which the valve units may be switched. In the first operational position of the valve unit it is set to connect the engines exhaust conduit to the inlet side of the turbine part 430 and in the second operational position of the valve unit it is set to connect the engine to the outlet side of the turbine part 403. Each of the valve unit is independently controllably to either of the operational positions.

Each of the valve units has different flow characteristics. In practise this means preferably that the flow areas of the valve units differ from each other. There is also a control system 430 provided in connection with the control device 422. The control system 430 is arranged to control the operational position of each valve unit 422.1, ,... 422.N into one of the two operational positions at which the valve unit may be switched. The control system is preferably provided with a probe system 432 transmitting the control information of the operation of the engine. Based on the control information the control system 430 defines the state of each valve unit and controls their operation accordingly. The control system is preferably provided also with a probe system 332 transmitting the information of at least the charge pressure directly or indirectly.

During the running of the engine the control system receives information relating to the operation of the engine. Based on the information and/or other information stored to be available to the control system 430 it controls each individual valve unit 422.1, ,... 422.N into one of the two operational positions. This way depending on the running condition of the engine the control system 430 sets the control device 422 into different combinations of operational positions of the valve units. This way the operation of the turbocharger may be controlled very efficiently.

The valve units have two operational positions. In the first operational position the valve units connect the flow of exhaust gas to the turbine part 403 and in the second operational position the valve units connect the flow of exhaust gas to passing by the turbine part via the bypass channel 412.2. The control device operates as a waste gate of the turbo charger unit 401.

The valve units i.e. the number of valve units and the flow characteristics of the valve units in the engine are selected so that substantially equal total flow characteristics of the control device 422 may be achieved with at least two different combinations of operational positions of the valve units. This way the control device and the engine may be used at least temporarily or until next service shutdown even if at least one of the valve units is defective.

With the present invention it is possible to efficiently control the operation of the turbocharger by means of setting the amount exhaust gas by-passing the turbine part 403 with respective selection of operational positions of the parallel valve units. Preferably the control device 422 operating as the waste gate comprises at least four parallel valve units.

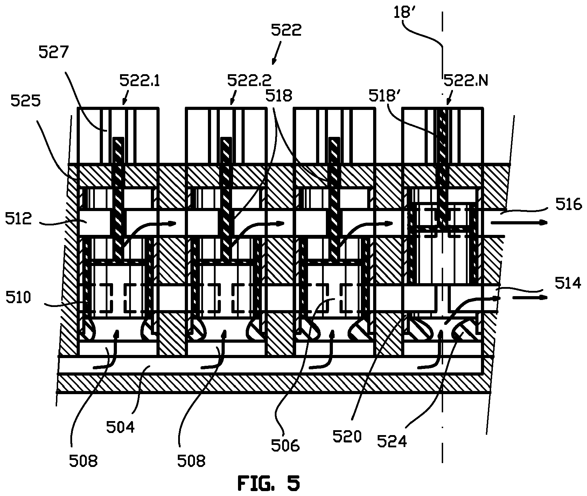

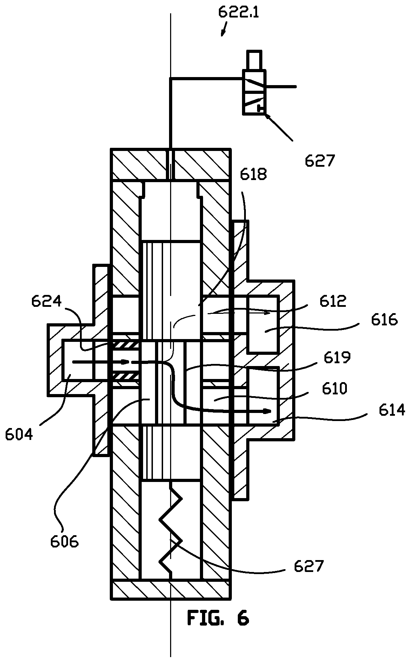

In Figure 5 there is shown an advantageous embodiment of the fluid flow control device 522 according to the invention. The fluid flow control device 522 comprises a base part 525 into which the other part of the fluid flow control device are arranged. The base part is provided with a fluid inlet manifold 504 to which the main fluid channel is to be connected. The base part 525 comprises also several valve spaces 506. The valve spaces 506 are cylindrical in the embodiment of figure 6 and the first end 508 of each space is connected to the fluid inlet manifold 504. The valve spaces are substantially identical to each other. The valve space is provided with a first outlet 510 and a second outlet 512 in its cylindrical portion. The first outlet 510 of each valve space is connected to a first outlet manifold 514 common to the first outlets. Respectively the second outlet 512 of each valve space is connected to a second outlet manifold 516 common to the second outlets.

There is valve member 518 arranged in each valve space. The valve member and the valve space form a valve unit in this embodiment. The valve member is arranged movable in the valve space 506 so that the position of the valve member rules the operational position of the valve unit. The valve member 518 is shown at its position where the fluid inlet manifold 504 is in flow connection with the first outlet manifold 514. With the reference 518' there is shown the valve member at its other position where the fluid inlet manifold 504 is in flow connection with the second outlet manifold 516.

To be more specific, the valve member 518 shown in the Figure 5 is a cylindrical substantially hollow sleeve which covers a portion of the valve space 506. As the position of the sleeve is changed it either covers the first outlet 510 or the second outlet 512, which makes it possible to guide the fluid inside the valve member 518. The valve member and valve space both have cylindrical cross section and common centre line 18'. In this case the movement of the valve member takes place in the direction of the centre line 18'.

The valve member is arranged such that only one of the first outlet 510 and the second outlet 512 may be in flow connection with the fluid inlet manifold 504.

In the embodiment shown in figure 5 the inner surface of the valve space 506 is covered with a sleeve 520 inside of which the valve member 518 is arranged. The inner surface of the sleeve 520 and the counter surface of the valve member 518 form a cylindrical sealing by means of which the fluid flow is directed to the direction ruled by the position of the valve member. The sleeve is provided with openings at the location of the first outlet 510 and the second outlet 512. The sleeve 520 is removably assembled and exchangeable so that after a period of use and/or when damaged or worn it may be replaced in a non destructive manner.

In the first end of the valve space 508 there is a restriction element 524. The valve spaces of valve units 522.1, 522.2, ... 522.N are substantially identical particularly with respect to other parts except the restriction element 524. The restriction element is arranged immediately upstream the sleeve 520, before the valve member. The restriction element 524 is advantageously a flange having an orifice. Here, the orifice is centrally located in the flange. In each of the valve units the orifice is of different diameter. This way the flange effects on the flow characteristics of the valve unit. The valve units may be modularized allowing their flow characteristics to be changed by simply changing only the flange part 524 in the valve unit. The restriction element may also be an element, such as a plate, with one or several holes located centrally or offset from centreline or the element.

According to an embodiment of the invention at least two of the the orifices in the valve units are of same diameter.

Each valve unit 522.1, 522.2, ... 522.N is provided with an actuator 527, which arranged to move the valve member in the valve space. The actuator is in the embodiment of figure 5 a dual action actuator which is capable of subjecting force to the valve member 518 in two directions in order to actively move the valve member between it two operational positions. The actuator may be a solenoid operated or hydraulically operated device or a combination thereof in which case a solenoid system controls the hydraulic pressure applied to the actuator 527. Each of the actuators 527 are in connection with a control device (not shown).

In figure 6 there is shown an embodiment of a valve unit 622.1 in which the fluid is passed outside the valve member 618 along the recess 619 arranged in to the valve member. In the fluid flow control device there are several valve units 622.1 e parallel coupled The valve space 606 is provided with a first outlet 610 and a second outlet 612 in its cylindrical portion connected to the first outlet manifold 614 and to the second outlet manifold 616 respectively. In this embodiment the actuator 627 is a single action actuator which is capable of subjecting force to the valve member 618 only in one direction. In order to move the valve member between it two operational positions there is a spring element 627 arranged in the opposite end to the actuator 627 of the valve member 618. The actuator 627 is of hydraulic/pneumatic type and it is capable of moving the valve member 618 in a direction against the spring and after releasing the work pressure the spring returns the valve member back to its initial position.

There is also a restriction element 624 arranged in the valve unit 622.1 of figure 6. The restriction element is arranged immediately upstream valve member. The restriction element 624 is in this embodiment a sleeve having a central opening. This way the sleeve effects on the flow characteristics of the valve unit. The valve units may be modularized allowing their flow characteristics to be changed by simply changing only the sleeve in the valve unit.

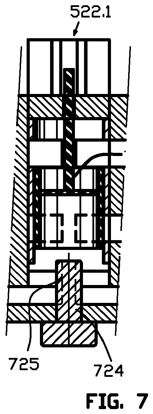

The restriction part may be realized in many ways. As is depicted in figure 7, instead of a flange or a sleeve the restriction part may be a replaceable pin 724 extending into the fluid flow channel of the valve unit. The valve unit in figure 7 corresponds to the valve unit in figure 5 except to the details relating to the restriction element. The effect of the restriction element may be changed by changing the pin having different dimensions as depicted by the dash-dot line 725.

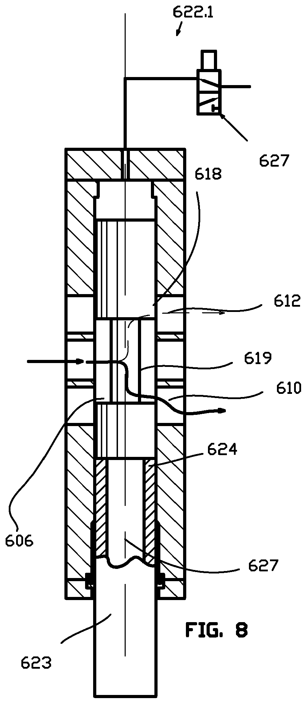

In figure 8 there is shown a still another embodiment of the invention which mainly corresponds to that of figure 6. In the figure 8 there is shown a restriction element 623, which is accomplished by means of stop 624 against which the valve member 618 is pushed at a position in which the fluid is directed into the first outlet 610. Due to the stop 624 the valve member movement is restricted so that it restricts the flow in to the first outlet 610. The valve unit may comprise a stop also at its other end to limit the movement of the valve member to its other operational position (not shown). This kind of a stop may be used in various kinds of valve configurations.

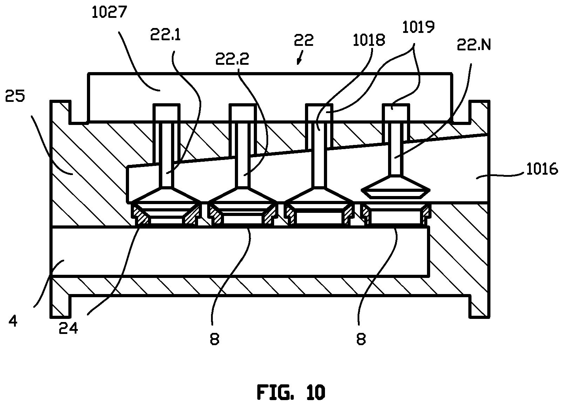

In Figure 10 there is shown an example of a fluid flow control device 22. The fluid flow control device 22 comprises a base part 25 into which the other parts of the fluid flow control device are arranged. The base part is provided with a fluid inlet manifold 4 to which the main fluid channel is to be connected. The base part is also provided with a fluid outlet manifold 1016.

The base part 25 comprises also several valve members 1018 separating the inlet manifold and the outlet manifold. There is a valve member 1018 arranged in each valve space. The valve member is movable so that the position of the valve member determines the operational position of the valve unit.

To be more specific, the valve member 1018 shown in the Figure 10 is a disk valve. As the position of the disk is changed it either closes or opens the connection between the inlet and outlet manifold.

In figure 10 there is also schematic illustration according to which each of the valve unit 22.1, 22.2, ... 22.N is provided with a manual locking system 1019 by means of which the valve member in each valve unit may be locked to either of their operational positions, The manual locking system 1019 comprises locking means in connection with each valve unit so that for example in the case of malfunction of the valve unit may be locked. The locking means is also arranged to allow the manual change of the operational position. Even if this is depicted here with the reference to the figure 10 the manual locking system may be naturally arranged in other embodiments of the valve units according to the invention.

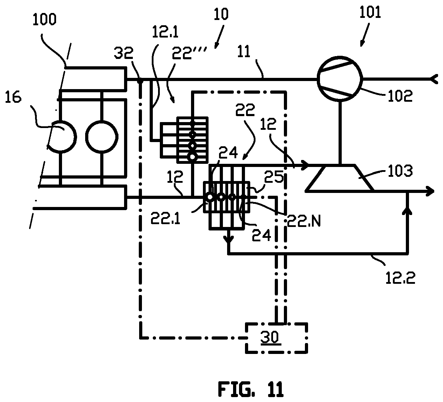

In figure 11 there is shown a still another embodiment of the invention in which the internal combustion piston engine 100 includes a turbo charger unit 101 with a compressor part 102 and a turbine part 103. In this embodiment the fluid flow system is also gas exchange system in connection with the engine 100.

The gas exchange system includes a main fluid channel which in this embodiment includes an exhaust gas conduit 12. The exhaust gas conduit 12 is at its first end in connection with the exhaust manifold and further with the cylinders 16 of the engine. In the cylinders the pressure and temperature of the exhaust gases is increased by means of cyclic combustion of fuel in the cylinders of the engine. The exhaust gas conduit is connected at its second end to the inlet of the turbine part 103 in which energy of the exhaust gas is partially used for driving the compressor part 102. The turbo charger unit 101 may be of a type known as such. The gas exchange system or the turbocharger unit 101 is provided with a recycling channel 12.1 which connects the engine's exhaust gas conduit 12 directly to the inlet side of the engine. The recycling channel 12.1 is provided with a fluid flow control device 22'" arranged. So, the flow control device 22'" controls the portion of exhaust gas via the recycling channel 12.1 to the inlet side of the engine i.e. allows some of the exhaust gas from the engine to be recycled back to the engine.

In other respects the fluid flow control device and its operation corresponds to that described in figure 4.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A fluid flow system (10) in an internal combustion piston engine, which fluid flow system (10) comprises main fluid channel (12) leading to a fluid utilization unit (16) and a branch channel (18) which branches from the main fluid channel (12) and a fluid flow control device (22) in the main fluid channel (12), and in which fluid flow system the fluid flow control device (22) is arranged at a the location where the branch channel branches from the main fluid channel, **characterized in that** the fluid flow control device (22) comprises at least four parallel on-off valve units (22.1, 22.2, ... 22.N) having two operational positions between which the valve units (22.1, 22,2, ... 22.N) can be switched, which operational positions governs the flow of the fluid either to the branch channel (18) or further in the main fluid channel (12), and at least one of the on-off valve units (22.1, 22.2, ... 22.N) is provided with a removably assembled restriction element (24) effecting on the flow characteristics of the valve unit.

2. A fluid flow system in an internal combustion piston engine according to claim 1, **characterized in that** all valve units (22.1, 22.2, ... 22.N) are provided with a removably assembled restriction element (24) effecting on the flow characteristics of the valve unit.

3. A fluid flow system in for an internal combustion piston engine according to claim 1, **characterized in that** the valve units (22.1, 22.2, ... 22.N) are identical to, and the restriction parts (24) are different from each other.

4. A fluid flow system in an internal combustion piston engine according to claim 1, **characterized in that** the restriction parts (24) are selected to provide required flow rate range in the engine.

5. A fluid flow system in an internal combustion piston engine according to claim 1, 2 or 3, **characterized in that** the restriction element (24) comprises a removably assembled flange.

6. A fluid flow system in an internal combustion piston engine according to claim 1, 2 or 3, **characterized in that** the restriction element comprises a pin element arranged removably in to the valve unit.

7. A fluid flow system in an internal combustion piston engine according to claim 1, 2 or 3, **characterized in that** the restriction element comprises a stop (624) to limit movement range of a valve member (618) of the valve unit.

8. A fluid flow system in an internal combustion piston engine according to anyone of the preceding claims, **characterized in that** the fluid flow control device is connected to a cooling system of the engine to control the flow of a cooling medium in the system.

9. A fluid flow system in an internal combustion piston engine according to anyone of the preceding claims 1-7, **characterized in that** the fluid flow control device is connected to a fuel feeding system of the engine to control the flow of a fuel in the system.

10. A fluid flow system in an internal combustion piston engine according to anyone of the preceding claims 1-7, **characterized in that** the fluid flow control device is connected to a lubrication oil system of the engine to control the flow of lubrication oil in the system.

11. A fluid flow system in an internal combustion piston engine according to anyone of the preceding claims 1-7, **characterized in that** the fluid flow control device is connected to a turbocharger in the exhaust gas system of the engine to control the flow of exhaust gas in the system.

## Patentansprüche

1. Fluiddurchflusssystem (10) in einer Kolbenbrennkraftmaschine, wobei das Fluiddurchflusssystem (10) einen Hauptfluidkanal (12), der zu einer Fluidverwendungseinheit (16) führt, und einen Abzweigungskanal (18), der von dem Hauptfluidkanal (12) abzweigt, und eine Fluiddurchflusssteuervorrichtung (22) im Hauptfluidkanal (12) umfasst, und wobei die Fluiddurchflusssteuervorrichtung (22) in dem Fluiddurchflusssystem an der Stelle angeordnet ist, an der der Abzweigungskanal von dem Hauptfluidkanal abzweigt, **dadurch gekennzeichnet, dass** die Fluiddurchflusssteuervorrichtung (22) mindestens vier parallele Ein-Aus-Ventileinheiten (22.1, 22.2, ... 22.N) umfasst, die zwei Betriebspositionen aufweisen, zwischen denen die Ventileinheiten (22.1, 22.2, ... 22.N) hin- und hergeschaltet werden können, wobei die Betriebspositionen den Durchfluss des Fluids entweder zu dem Abzweigungskanal (18) oder weiter in den Hauptfluidkanal (12) regeln, und wobei mindestens eine der Ein-Aus-Ventileinheiten (22.1, 22.2, ... 22.N) mit einem abnehmbar zusammengebauten Restriktionselement (24) versehen ist, das Auswirkungen auf die Durchflusscharakteristiken der Ventileinheit hat.

2. Fluiddurchflusssystem in einer Kolbenbrennkraftmaschine nach Anspruch 1, **dadurch gekennzeichnet, dass** alle Ventileinheiten (22.1, 22.2, ... 22.N) mit einem abnehmbar zusammengebauten Restriktionselement (24) versehen sind, das Auswirkungen auf die Durchflusscharakteristiken der Ventileinheit hat.

3. Fluiddurchflusssystem in einer Kolbenbrennkraftmaschine nach Anspruch 1, **dadurch gekennzeichnet, dass** die Ventileinheiten (22.1, 22.2, ... 22.N) identisch zueinander sind und die Restriktionsteile (24) voneinander verschieden sind.

4. Fluiddurchflusssystem in einer Kolbenbrennkraftmaschine nach Anspruch 1, **dadurch gekennzeichnet, dass** die Restriktionsteile (24) so ausgewählt sind, dass sie den erforderlichen Durchflussratenbereich in der Maschine bereitstellen.

5. Fluiddurchflusssystem in einer Kolbenbrennkraftmaschine nach Anspruch 1, 2 oder 3, **dadurch gekennzeichnet, dass** das Restriktionselement (24) einen abnehmbar zusammengebauten Flansch umfasst.

6. Fluiddurchflusssystem in einer Kolbenbrennkraftmaschine nach Anspruch 1, 2 oder 3, **dadurch gekennzeichnet, dass** das Restriktionselement ein Stiftelement umfasst, das abnehmbar in der Ventileinheit angeordnet ist.

7. Fluiddurchflusssystem in einer Kolbenbrennkraftmaschine nach Anspruch 1, 2 oder 3, **dadurch gekennzeichnet, dass** das Restriktionselement einen Anschlag (624) umfasst, um einen Bewegungsbereich eines Ventilglieds (618) der Ventileinheit zu begrenzen.

8. Fluiddurchflusssystem in einer Kolbenbrennkraftmaschine nach einem der vorhergehenden Ansprüche, **dadurch gekennzeichnet, dass** die Fluiddurchflusssteuervorrichtung mit einem Kühlsystem der Maschine verbunden ist, um den Durchfluss eines Kühlmittels in dem System zu steuern.

9. Fluiddurchflusssystem in einer Kolbenbrennkraftmaschine nach einem der vorhergehenden Ansprüche 1 bis 7, **dadurch gekennzeichnet, dass** die Fluiddurchflusssteuervorrichtung mit einem Kraftstoffversorgungssystem der Maschine verbunden ist, um den Durchfluss eines Kraftstoffs in dem System zu steuern.

10. Fluiddurchflusssystem in einer Kolbenbrennkraftmaschine nach einem der vorhergehenden Ansprüche 1 bis 7, **dadurch gekennzeichnet, dass** die Fluiddurchflusssteuervorrichtung mit einem Schmierölsystem der Maschine verbunden ist, um den Durchfluss von Schmieröl in dem System zu steuern.

11. Fluiddurchflusssystem in einer Kolbenbrennkraftmaschine nach einem der vorhergehenden Ansprüche 1 bis 7, **dadurch gekennzeichnet, dass** die Fluiddurchflusssteuervorrichtung mit einem Turbolader im Abgassystem der Maschine verbunden ist, um den Durchfluss von Abgas in dem System zu steuern.

## Revendications

1. Système d'écoulement de fluide (10) dans un moteur à piston à combustion interne, ledit système d'écoulement de fluide (10) comprenant un canal de fluide principal (12) qui mène à une unité d'utilisation de fluide (16) et un canal dérivé (18) qui dérive du canal de fluide principal (12) et un dispositif de régulation d'écoulement de fluide (22) dans le canal de fluide principal (12), et dans ledit système d'écoulement de fluide, le dispositif de régulation d'écoulement de fluide (22) est agencé à l'emplacement où le canal dérivé dérive du canal de fluide principal, **caractérisé en ce que** le dispositif de régulation d'écoulement de fluide (22) comprend au moins quatre unités de vanne tout ou rien parallèles (22.1, 22.2, ... 22.N) présentant deux positions de service entre lesquelles peuvent être commutées les unités de vanne (22.1, 22,2, ... 22.N), lesdites positions de service commandant l'écoulement du fluide soit vers le canal dérivé (18), soit en continuant dans le canal de fluide principal (12), et **en ce qu'**au moins une des unités de vanne tout ou rien (22.1, 22.2, ... 22.N) est pourvue d'un élément de restriction assemblé amovible (24) agissant sur les caractéristiques d'écoulement de l'unité de vanne.

2. Système d'écoulement de fluide dans un moteur à piston à combustion interne selon la revendication 1, **caractérisé en ce que** toutes les unités de vanne (22.1, 22.2, ... 22.N) sont pourvues d'un élément de restriction assemblé amovible (24) agissant sur les caractéristiques d'écoulement de l'unité de vanne.

3. Système d'écoulement de fluide dans un moteur à piston à combustion interne selon la revendication 1, **caractérisé en ce que** les unités de vanne (22.1, 22.2, ... 22.N) sont identiques entre elles, et **en ce que** les parties de restriction (24) sont différentes entre elles.

4. Système d'écoulement de fluide dans un moteur à piston à combustion interne selon la revendication 1, **caractérisé en ce que** les parties de restriction (24) sont sélectionnées pour procurer une plage de débit requise dans le moteur.

5. Système d'écoulement de fluide dans un moteur à piston à combustion interne selon la revendication 1, 2 ou 3, **caractérisé en ce que** l'élément de restriction (24) comprend une bride assemblée amovible.

6. Système d'écoulement de fluide dans un moteur à piston à combustion interne selon la revendication 1, 2 ou 3, **caractérisé en ce que** l'élément de restriction comprend un élément d'aiguille agencé de manière amovible dans l'unité de vanne.

7. Système d'écoulement de fluide dans un moteur à piston à combustion interne selon la revendication 1, 2 ou 3, **caractérisé en ce que** l'élément de restriction comprend une butée (624) pour limiter la plage de déplacement d'un élément de vanne (618) de l'unité de vanne.

8. Système d'écoulement de fluide dans un moteur à piston à combustion interne selon l'une quelconque des revendications précédentes, **caractérisé en ce que** le dispositif de régulation d'écoulement de fluide est connecté à un système de refroidissement du moteur pour réguler l'écoulement d'un fluide de refroidissement dans le système.

9. Système d'écoulement de fluide dans un moteur à piston à combustion interne selon l'une quelconque des revendications précédentes 1 à 7, **caractérisé en ce que** le dispositif de régulation d'écoulement de fluide est connecté à un système d'alimentation de carburant du moteur pour réguler l'écoulement d'un carburant dans le système.

10. Système d'écoulement de fluide dans un moteur à piston à combustion interne selon l'une quelconque des revendications précédentes 1 à 7, **caractérisé en ce que** le dispositif de régulation d'écoulement de fluide est connecté à un système d'huile de lubrification du moteur pour réguler l'écoulement d'huile de lubrification dans le système.

11. Système d'écoulement de fluide dans un moteur à piston à combustion interne selon l'une quelconque des revendications précédentes 1 à 7, **caractérisé en ce que** le dispositif de régulation d'écoulement de fluide est connecté à un turbocompresseur dans le système de gaz d'échappement du moteur pour réguler l'écoulement de gaz d'échappement dans le système.
